# EUROPÄISCHE PATENTANMELDUNG

(11) **EP 2 572 594 A2**
(43) Veröffentlichungstag der Anmeldung: **27.03.2013**
(21) Anmeldenummer: 12182727.3
(22) Anmeldetag: 03.09.2012
(51) Int. Cl.: A24B 9/00, A24C 5/34, G01N 22/00, G01N 22/02, G01N 22/04

(54) **Von einem Materialstrang durchsetztes Mikrowellenresonatorgehäuse zur Messung der Eigenschaften des Materialstrangs**

(30) Priorität: 20.09.2011 DE 102011083051
(71) Anmelder: HAUNI Maschinenbau AG, 21033 Hamburg (DE)
(72) Erfinder: Schröder, Dierk, 22399 Hamburg (DE); Hohenstein, Norbert, 21481 Lauenburg (DE)
(74) Vertreter: Volmer, Jochen

(57) **Zusammenfassung**

Die Erfindung betrifft ein Mikrowellenresonatorgehäuse (20, 20', 20"), insbesondere zur Messung von Eigenschaften eines Materialstrangs (1) der Tabak verarbeitenden Industrie, mit wenigstens einem als Mikrowellenresonator (21) ausgebildeten im Wesentlichen hohlzylindrischen Innenraum, der durch einen Materialstrang (1) durchsetzbar ist und dem Mikrowellen zuführbar sind, wobei die Endflächen (21 a, 21 b) des Mikrowellenresonators (21) in der Symmetrieachse des Mikrowellenresonators (21) zentrale Durchführungsöffnungen für einen Materialstrang aufweisen. Die Erfindung betrifft ferner eine Maschine der Tabak verarbeitenden Industrie.

Das erfindungsgemäße Mikrowellenresonatorgehäuse (20, 20', 20") zeichnet sich dadurch aus, dass wenigstens eine der beiden Endflächen (21a, 21b) in einem ringförmigen Bereich um die Durchführungsöffnung herum in einen umlaufenden und radial nach innen überstehenden Kragen (26, 28, 28') münden, dessen innere Öffnung eine Durchführungsöffnung für den Materialstrang (1) bildet und der eine von dem den Mikrowellenresonator (21) bildenden Innenraum abgewandte Rückseite aufweist, an der sich der Innendurchmesser des Gehäuses (20, 20', 20") gegenüber dem Durchmesser der Durchführungsöffnung unter Bildung einer ringförmigen Hinterdrehung (27, 29, 29') erweitert.

## Beschreibung

Diese Anmeldung beansprucht die Priorität der deutschen Anmeldung mit dem amtlichen Aktenzeichen 10 2011 083 051.0, eingereicht am 20. September 2011, deren Gesamtinhalt hier durch Rückbeziehung aufgenommen wird.

Die Erfindung betrifft ein Mikrowellenresonatorgehäuse, insbesondere zur Messung von Eigenschaften eines Materialstrangs der Tabak verarbeitenden Industrie, mit wenigstens einem als Mikrowellenresonator ausgebildeten im Wesentlichen hohlzylindrischen Innenraum, der durch einen Materialstrang durchsetzbar ist und dem Mikrowellen zuführbar sind, wobei die Endflächen des Mikrowellenresonators in der Symmetrieachse des Mikrowellenresonators zentrale Durchführungsöffnungen für einen Materialstrang aufweisen. Die Erfindung betrifft ferner eine Maschine der Tabak verarbeitenden Industrie.

Die Erfindung betrifft insbesondere das Gebiet der Strangbildung und Strangverarbeitung in der Tabak verarbeitenden Industrie, also die Erzeugung von Zigarettensträngen und Filtersträngen in Strangmaschinen. Beispielsweise wird ein Zigarettenstrang erzeugt, indem zunächst Tabak auf einen Strangförderer aufgeschauert wird, der Tabakstrang mit einem Umhüllungspapierstreifen umhüllt wird und anschließend von dem Tabakstrang Zigaretten mehrfacher Gebrauchslänge abgelängt werden. Das Bilden des Tabak- oder Filterstrangs und das anschließende Schneiden bzw. Ablängen des Strangs erfolgt mit hoher Geschwindigkeit. Typisch sind bei heutigen Zigaretten- und Filterherstellungsmaschinen Stranggeschwindigkeiten von 10 m/s, wobei bei 100 mm Abschnittslänge ein Schnitttakt von 100 pro Sekunde folgt.

Die Qualität der Zigaretten hängt vom Zustand des Tabaks im Zigarettenstrang ab. Aus diesem Grund ist vorgesehen, die Feuchtigkeit und die Dichte des Tabaks im Zigarettenstrang zu messen und insbesondere die Dichte zu regeln. Weiterhin wird im Falle von plötzlichen und kurzzeitigen Signalschwankungen auf das Vorhandensein von Fremdkörpern geschlossen, wobei die entsprechenden Strangabschnitte nachfolgend ausgesondert werden.

Dies geschieht in modernen Zigarettenherstellungsmaschinen mit der Hilfe von Mikrowellenmesseinrichtungen, die wenigstens ein Mikrowellen-Resonatorgehäuse aufweisen, durch das der Tabakstrang hindurchgeführt wird.

Ein solches Resonatorgehäuse ist aus DE 198 54 550 B4 bekannt, dessen Offenbarung in dieser Patentanmeldung vollinhaltlich aufgenommen sein soll. Das dort gezeigte Resonatorgehäuse für Mikrowellen wird von einem Strang der Tabak verarbeitenden Industrie durchsetzt und besteht aus einem metallischen Material mit niedrigem Temperaturausdehnungskoeffizient. Dem Resonatorgehäuse sind zwecks Erfassung der Masse und/oder der Feuchte des Strangmaterials Mikrowellen zuführbar. Dieses Gehäuse weist eine Temperaturregelanordnung mit einem Fühler für die Temperatur des Gehäuses und einem Heiztransistor auf, wobei der Fühler den Heiztransistor derart steuert, dass dessen Verlustwärme die Temperatur des Gehäuses zumindest annähernd konstant über der Umgebungstemperatur hält.

Ein weiteres Resonatorgehäuse ist in DE 10 2004 017 597 B4 offenbart, dessen Offenbarung ebenfalls in dieser Patentanmeldung vollinhaltlich aufgenommen sein soll. Darin ist ein Resonatorgehäuse mit einem Resonatorraum in Form eines Hohlzylinders offenbart, der symmetrisch zum Zigarettenstrang angeordnet ist. Es sind eine Einkopplungsantenne und eine Auskopplungsantenne vorgesehen, mit deren Hilfe ein Mikrowellensignal zur Anregung einer Schwingung im Resonatorraum eingekoppelt wird und ein transmittierter Teil wieder ausgekoppelt wird. Dieses Resonatorgehäuse besteht im Wesentlichen aus Zerodur^{®}, das einen sehr niedrigen Temperaturausdehnungskoeffizienten besitzt. Die Innenwände des Resonatorgehäuses sind mit Gold beschichtet.

Die Messung mittels eines Mikrowellenresonators, etwa gemäß DE 198 54 550 B4 oder DE 10 2004 017 597 B4, nutzt den physikalischen Umstand, dass die Resonanzkurve des Mikrowellenfeldes sich im Mikrowellenresonator bei Anwesenheit eines Materialstrangs im Mikrowellenresonator ändert. Im Grundsatz wird die komplexe Dielektrizitätskonstante des durch den Resonator geführten Materialstranges gemessen. Die komplexe Dielektrizitätskonstante weist einen Realteil und einen Imaginärteil bzw. einen Betrag und eine Phase auf. In den beiden Kennwerten der komplexen Dielektrizitätskonstanten sind die Informationen der Dichte und des Wassergehalts des Stranges enthalten. Veränderungen von Dichte oder Wassergehalt führen zu den charakteristischen Veränderungen der beiden Kennwerte und damit der Resonanzkurve des Mikrowellenresonators.

Gegenüber dem unbeladenen Mikrowellenresonator verschiebt sich das Maximum bzw. Minimum einer Resonanzkurve bei Anwesenheit eines Strangmaterials hin zu niedrigen Frequenzen. Außerdem verbreitert sich die Resonanzkurve. Änderungen der Dichte und Änderungen der Feuchte des Materialstrangs erzeugen jeweils eigene spezifische Veränderungen der Position, Höhe und Breite der Resonanzkurve. Wenn wenigstens zwei Messgrößen der Resonanzkurve gemessen werden, können daher die Dichte und die Feuchte im Rahmen der Messgenauigkeit und der funktionalen Abhängigkeiten der Messwerte von Strangdichte und Strangfeuchte unabhängig voneinander bestimmt werden.

Den beiden aus DE 198 54 550 B4 und DE 10 2004 017 597 B4 bekannten Resonatorgehäusen ist gemeinsam, dass sie eine hohlzylindrische Form aufweisen und ein Materialstrang zentral durch die Endflächen des Hohlzylinders hindurchtritt. Am Ort des Durchtritts des Materialstrangs bzw. eines Schutzrohres für den Materialstrang sind die Endflächen rohrförmig etwas nach innen erstreckt. Damit wird der Resonatorspalt zwischen den Endflächen schmaler gemacht, so dass die Ortsauflösung des in den Materialstrang eindringenden Mikrowellenfeldes verbessert wird.

Prinzipiell sollten Messungen mit Mikrowellenresonatoren so erfolgen, dass das elektrische Feld der Mikrowellenschwingung das zu messende Produkt möglichst gut ortsaufgelöst durchdringt. Abhängig von der Breite des Resonatorspaltes kommt es zu einer Feldausdehnung in die Durchtrittsbohrung des Resonators. Daher wird der Strang nicht nur in der Längsausdehnung des Resonatorspaltes gemessen, sondern außerdem aufgrund der Feldausdehnung auch in der Resonatorbohrung. Dies ist bei den bekannten Resonatorgehäusen stark ausgeprägt. Hierdurch verringert sich die Ortsauflösung in Strangrichtung. Wenn zur Verbesserung der Ortsauflösung der Resonatorspalt weiter verkleinert wird, hat dies zur Folge, dass sich der Betrag und die Richtung der Feldstärke und damit die Messempfindlichkeit über dem Durchmesser der Resonatorbohrung ändern. Eine Verringerung des Resonatorspaltes führt dazu, dass das Feld nicht mehr so tief in den Materialstrang eindringt und somit die Messempfindlichkeit im Zentrum des Materialstrangs erheblich abnimmt.

Es ergibt sich somit das Dilemma, dass bei einem Resonator mit kleinem Resonatorspalt die Ortsauflösung in Strangrichtung zwar vergleichsweise hoch ist, dafür aber eine geringe Eindringtiefe des elektrischen Feldes in den Materialstrang vorliegt. Hierdurch wird die Strangmitte in der Messung stark unterbewertet und es kommt zu Messabweichungen bei der Gewichtsmessung. Bei der Messfunktion der Erkennung von Fremdkörpern führt diese Eigenschaft dazu, dass in der Mitte des Stranges Fremdkörper deutlich schlechter erkannt werden als am Rand. Bei einem breiten Resonatorspalt hingegen ergibt sich eine schlechtere Ortsauflösung in Strangrichtung, dafür aber eine größere Eindringtiefe und damit eine bessere Bewertung des Gewichts und der Erkennung von Fremdkörpern in der Strangmitte.

Der Erfindung liegt somit die Aufgabe zugrunde, ein Mikrowellenresonatorgehäuse zur Verfügung zu stellen, mit dem gleichzeitig eine hohe Ortsauflösung und eine große Eindringtiefe des Mikrowellenfeldes in einen Materialstrang der Tabak verarbeitenden Industrie gewährleistet wird.

Diese Aufgabe wird bei einem Mikrowellenresonatorgehäuse, insbesondere zur Messung von Eigenschaften eines Materialstrangs der Tabak verarbeitenden Industrie, mit wenigstens einem als Mikrowellenresonator ausgebildeten, insbesondere im Wesentlichen hohlzylindrischen, Innenraum, der durch einen Materialstrang durchsetzbar ist und dem Mikrowellen zuführbar sind, wobei die Endflächen des Mikrowellenresonators in der Symmetrieachse des Mikrowellenresonators zentrale Durchführungsöffnungen für einen Materialstrang aufweisen, dadurch gelöst, dass wenigstens eine der beiden Endflächen in einem ringförmigen Bereich um die Durchführungsöffnung herum in einen umlaufenden und radial nach innen überstehenden Kragen münden, dessen innere Öffnung eine Durchführungsöffnung für den Materialstrang bildet und der eine von dem den Mikrowellenresonator bildenden Innenraum abgewandte Rückseite aufweist, an der sich der Innendurchmesser des Gehäuses gegenüber dem Durchmesser der Durchführungsöffnung unter Bildung einer ringförmigen Hinterdrehung erweitert.

Die vorliegende Erfindung beruht auf dem Grundgedanken, dass durch die Verwendung eines umlaufenden und radial nach innen überstehenden Kragens sowie der Hinterdrehung hinter dem Kragen anstelle der zuvor verwendeten rohrförmigen Erstreckung eine gezielte Beeinflussung der Feldgeometrie im Bereich des Materialstrangs erfolgt, wodurch das Feld tiefer und stärker gebündelt als bisher in den Materialstrang eindringt. Unter einer Hinterdrehung wird im Rahmen der Erfindung ein ringförmiger Hohlraum um den Materialstrang im Resonatorgehäuse verstanden. Der Kragen stellt eine Potentialspitze dar, von dem viele Feldlinien ausgehen. Da der Kragen mit seiner Kante nach innen, also zum Materialstrang hin, gerichtet ist, verlaufen die Feldlinien gebündelt in den Materialstrang hinein und dringen somit auch tiefer in den Materialstrang ein als dies mit einer rohrförmigen Erstreckung, die parallel zum Materialstrang ausgerichtet ist, möglich ist. Gleichzeitig bündelt die Rückseite des jeweiligen Kragens die zurücklaufenden Feldlinien, so dass die Erstreckung des Hauptteils des elektromagnetischen Wechselfeldes in Längsrichtung des Materialstrangs sehr viel stärker gebündelt ist als dies zuvor der Fall war. Die Rückseite des Kragens zwingt die Feldlinien zurück, so dass sie sich nicht weit in die Durchtrittsöffnungen für den Materialstrang hinein erstrecken können. Vorzugsweise weisen beide Endflächen entsprechende Kragen auf.

Die Kragen mit den entsprechenden Hinterdrehungen sorgen gleichzeitig dafür, dass die Eindringtiefe des Mikrowellenfeldes in den Materialstrang erhöht wird und dass die Erstreckung des Mikrowellenfeldes in Strangrichtung stark begrenzt wird. Damit wird sowohl die Ortsauflösung als auch die Sensitivität für die Strangmasse bzw. für Fremdkörper im Zentrum des Stranges erhöht.

Erfindungsgemäß wird unter einem nach innen überstehenden Kragen ein Kragen bzw. eine flächige umlaufende Verlängerung der jeweiligen Endfläche des zylindrischen Resonators verstanden, die gegenüber dem weiteren Verlauf des Resonatorgehäuses außerhalb des Mikrowellenresonators weiter nach innen vorsteht als die Innenwand des weiteren Resonatorgehäuses, so dass sich die ringförmige Hinterdrehung jenseits des Kragens ergibt. Auch diese Maßnahme sorgt für eine Bündelung der Feldlinien auf dem Kragen und dafür, dass wenige Feldlinien von der Innenfläche der Hinterdrehung ausgehen.

Vorzugsweise wird die Hinterdrehung oder werden die Hinterdrehungen in Strangförderrichtung stromaufwärts und/oder stromabwärts des Mikrowellenresonatorgehäuses bzw. des Mikrowellenresonators durch einen oder mehrere radial nach innen überstehende Gehäuseabschnitte abgeschlossen. Dies dient einerseits zur verbesserten Verhinderung eines Mikrowellenfeldaustritts aus dem Mikrowellenresonatorgehäuse und andererseits der mechanischen Stützung des Materialstrangs bzw. eines Schutzrohrs für den Materialstrang.

Im Rahmen der Erfindung ist vorzugsweise vorgesehen, dass der Kragen oder die Kragen eine im Querschnitt gerade oder gebogene ringförmig um die Durchführungsöffnung herum laufende Fläche bildet oder bilden. Durch die geeignete Wahl der Geometrie des Kragens lassen sich Parameter wie Größe des Resonatorspaltes, Ausrichtung des Feldes und Begrenzung der Ausbreitung des Mikrowellenfeldes in Strangrichtung sehr flexibel festlegen.

Die Wahl der Kragengeometrie hat auch einen Einfluss auf die Ausbildung von zusätzlichen Resonanzmoden im Mikrowellenresonator. So hat sich bei den bekannten Resonatorgehäusen wie beispielsweise in DE 198 54 550 C5 mit der rohrförmigen Erstreckung herausgestellt, dass es neben der grundsätzlichen E₀₁₀-Mode auch noch weitere höherfrequente Moden gibt. Diese können durch eine geeignete Wahl der Kragengeometrie, beispielsweise durch eine abgewinkelte oder gekurvt-flächige Geometrie, unterdrückt werden. Insbesondere können Moden unterdrückt werden, die in den Messbereich der geplanten Messung mit dem Mikrowellenresonatorgehäuse fallen.

Die Länge der Hinterdrehungen in Strangrichtung ist vorzugsweise wenigstens so lang wie der Resonatorspalt. Die Tiefe der Hinterdrehung beträgt vorzugsweise wenigstens ein Zehntel, ferner vorzugsweise wenigstens ein Fünftel oder mehr der Länge des Resonatorspalts. Diese Werte stellen sicher, dass das Mikrowellenfeld sich im Resonatorspalt bündelt und nicht wesentlich in Strangrichtung aus dem Mikrowellenresonator austritt.

Vorzugsweise ist vorgesehen, dass eine die Durchführungsöffnung begrenzende Endkante des Kragens abgerundet ist. Die abgerundete Kante bewirkt, dass keine starke Bündelung des Mikrowellenfeldes an scharfen Kanten auftritt. Damit werden besonders viele Feldlinien gleichmäßig in den Materialstrang hineinprojiziert.

Vorteilhafterweise verlängert der Kragen die Endfläche oder schließt einen Winkel mit der Endfläche von mehr als 90° bis zu 180°, insbesondere zwischen 120° und 150°, ein. Der derartig definierte Winkel ist der Winkel zwischen der Endfläche und der Vorderseite des Kragens. Die Verlängerung der Endfläche in Form eines Rohrs gemäß DE 198 54 550 C5 schließt nach dieser Definition mit der Endfläche einen Winkel von 90° ein. Damit ein solcher Kragen in Richtung auf den Materialstrang, also nach innen, übersteht, muss dieser Winkel also größer als 90° sein. Ein Winkel von 180° bedeutet, dass die im Mikrowellenresonator nach innen weisende Fläche des Kragens die Endfläche fortsetzt. In diesem Fall ist der Resonatorspalt gleich der Höhe des den Mikrowellenresonator bildenden Hohlzylinders. Im Fall, dass der Winkel zwischen 90° und 180° ist, ist der Resonatorspalt entsprechend schmaler. Ein Winkel von 180° ergibt eine maximale Projektion des Mikrowellenfeldes in das Zentrum des Materialstrangs hinein. In diesem Fall kann der Resonatorspalt durch die geeignete Auswahl der Höhe des Mikrowellenresonators eingestellt werden. Bei einer bevorzugten Auswahl des Winkels von etwa 135° ist der Resonatorspalt kleiner, die Kragen weisen aufeinander zu, so dass eine starke Bündelung des Mikrowellenfeldes erreicht wird und verhindert wird, dass das Mikrowellenfeld sich in Strangrichtung weiter ausbreitet.

Vorzugsweise sind beide Endflächen mit entsprechenden Kragen und Hinterdrehungen ausgebildet.

Alternativ ist im Rahmen der Erfindung auch vorgesehen, dass der Kragen mit der Endfläche einen Winkel von mehr als 180°, insbesondere bis zu 225°, einschließt. In einem solchen Fall wird der Resonatorspalt vergrößert. Die Bündelung der Feldlinien erfolgt aber auch in diesen Fall noch aufgrund der Ausbildung der Kragen.

Die Hinterdrehung oder die Hinterdrehungen weisen vorzugsweise einen trapezförmigen Querschnitt auf. Dies ergibt sich insbesondere bei einem Kragen, der einen Winkel mit der Endfläche von mehr als 90° einschließt, dann, wenn auch die die Hinterdrehung abschließende Endfläche geneigt ist.

In einer vorteilhaften Weiterbildung verläuft ein Schutzrohr für den Materialstrang durch die Durchführungsöffnungen und den Mikrowellenresonator, wobei eine Wandstärke des Schutzrohrs auf dem durch den Mikrowellenresonator verlaufenden Abschnitt geringer ist als außerhalb des Mikrowellenresonators. Dies betrifft insbesondere den Abschnitt des Schutzrohres, der zwischen den Kragenkanten verläuft. Das Schutzrohr ist vorzugsweise aus einem Material, das für Mikrowellen transparent ist. Dies wird dadurch gefördert, dass im Bereich des Resonatorspaltes die Wandstärke reduziert ist. Wenn das Material des Schutzrohrs nicht vollständig transparent gegenüber Mikrowellenstrahlung ist, sondern diese abschwächt, hat diese erfindungsgemäße Ausbildung des Schutzrohrs außerdem zur Folge, dass außerhalb des Resonatorspaltes auch durch die größere Dicke des Schutzrohres das Mikrowellenfeld abgeschwächt wird und somit im geringeren Maße zum Messergebnis beiträgt.

Im Rahmen der Erfindung ist es vorteilhaft, wenn mehrere Mikrowellenresonatoren mit unterschiedlichen Resonatorspalten, also unterschiedlichen Abständen zwischen den Krägen, verwendet werden können, abwechselnd oder in Kombination.

Bei dem bislang beschriebenen erfindungsgemäßen Mikrowellenresonatorgehäuse wird durch die besondere Gestaltung des Kragens die Ausdehnung des Messfeldes, also der Resonatorspalt, in längsaxialer Richtung des Materialstrangs gegenüber einem Resonator ohne erfindungsgemäßen Kragen reduziert. Hierdurch kann bei gegebenem Abstand von gegenüberliegendem Kragen die Ortsauflösung von Inhomogenitäten in einen Strang, der sich durch das Resonatorgehäuse bewegt, verbessert werden, ohne dass beispielsweise der Abstand der Seitenflächen des Resonators verändert wird. So ist es möglich, die Betriebsfrequenz des Mikrowellenresonators beizubehalten und dieselbe Elektronik zu verwenden wie zuvor.

Grundsätzlich kann die Ortsauflösung durch eine weitere Verringerung des Abstandes der gegenüberliegenden Kragen oder Endflächen noch weiter verbessert werden. So ist es möglich, einen Resonator des beschriebenen erfindungsgemäßen Typs mit gleichem Durchmesser des Hohlraums und gleichen Sondenpositionen, also Positionen der Einkopplungsantenne und der Auskopplungsantenne, aber mit weiter verringertem Abstand der gegenüberliegenden Kragen und der Seitenflächen zu verwenden. Dabei stellt sich eine geringere Resonanzfrequenz ein. Diese Änderung erfordert eine kostenintensive Anpassung des Tiefpassfilters in der angeschlossenen Mikrowellenelektronik gegenüber einem Mikrowellenresonator mit größerem Resonatorspalt.

Eine andere Möglichkeit, bei verringertem Kragenabstand die Resonanzfrequenz beizubehalten, besteht darin, den Durchmesser des Resonatorhohlraumes zu verringern. Diese Änderung hat zur Folge, dass der Sondenabstand verändert werden muss. Auch hierbei ist eine Änderung der angeschlossenen Mikrowellenschaltung notwendig.

Bei diesen beiden Lösungsansätzen ist es somit nicht möglich, die gleiche Mikrowellenschaltung zu verwenden wie bei einem Resonator mit größerem bzw. normalem Kragenabstand. Wenn mehrere Kragenabstände zum Einsatz kommen, alternativ oder hintereinander, erfordert dies somit den Einsatz und die Pflege zweier unterschiedlicher Mikrowellenschaltungen mit den daraus resultierenden zusätzlichen Kosten.

Die der Erfindung zugrunde liegende Aufgabe wird demgegenüber auch durch ein Mikrowellenresonatorgehäuse, insbesondere zur Messung von Eigenschaften eines Materialstrangs der Tabak verarbeitenden Industrie, mit wenigstens einem als Mikrowellenresonator ausgebildeten im Wesentlichen hohlzylindrischen Innenraum, der durch einen Materialstrang durchsetzbar ist und dem Mikrowellen zuführbar sind, wobei die Endflächen des Mikrowellenresonators in der Symmetrieachse des Mikrowellenresonators zentrale Durchführungsöffnungen für einen Materialstrang aufweisen, insbesondere wie vorstehend als erfindungsgemäß beschrieben, gelöst, das dadurch weitergebildet ist, dass der als Mikrowellenresonator ausgebildete Innenraum einen von einem Hohlzylinder abweichenden Querschnitt aufweist, der um zwei aufeinander senkrecht stehende Symmetrieachsen spiegelsymmetrisch ist, wobei der Innenraum in Richtung einer ersten Symmetrieachse eine größere Ausdehnung aufweist als in Richtung einer zweiten Symmetrieachse, wobei der Materialstrang durch den Schnittpunkt der beiden Symmetrieachsen förderbar ist oder verläuft.

Der Lösungsgedanke hierbei ist, die Notwendigkeit der Verwendung zweier unterschiedlicher Mikrowellenschaltungen zu vermeiden. Dabei werden einerseits vorzugsweise die Sondenpositionen in den beiden Anordnungen mit kleinem und großem Kragenabstand beibehalten. Außerdem liegt die Resonanzfrequenz des Resonators in beiden Anordnungen vorteilhafterweise so nahe beieinander, dass mit den gleichen Tiefpassfiltern in der Mikrowellenschaltung gearbeitet werden kann. Somit ist vorzugsweise vorgesehen, dass für einen abwechselnden oder gleichzeitigen Betrieb mit einem hohlzylindrischen Mikrowellenresonator die Positionen der Einkopplungsantenne und der Auskopplungsantenne gegenüber einem hohlzylindrischen Mikrowellenresonator beibehalten wird und/oder die Resonanzfrequenz des Mikrowellenresonators so nahe bei der Resonanzfrequenz eines hohlzylindrischen Mikrowellenresonators liegt, dass mit den gleichen Tiefpassfiltern in der jeweiligen Mikrowellenschaltung gearbeitet werden kann

Diese Merkmale können dadurch erfüllt werden, dass der Resonatorhohlraum im Wesentlichen oval, elliptisch oder ähnlich ausgeführt wird, so dass die große Halbachse bzw. erste Symmetrieachse den gleichen Durchmesser hat wie der gegebenenfalls hohlzylindrische Resonator mit großem Kragenabstand, während die kleinere Halbachse bzw. die zweite Symmetrieachse einen geringeren Durchmesser aufweist.

Damit ist vorzugsweise der Querschnitt des Mikrowellenresonators im Wesentlichen oval. Hierbei wird unter "im Wesentlichen oval" eine ebene, rundliche, konvexe Figur verstanden, die unter anderem Ellipsen als Spezialfell umfasst. Die Ovale gemäß der Erfindung können auch gerade Stücke umfassen, wobei die Stoßpunkte, an denen gerade Stücke und gekrümmte Kurven aneinander stoßen, stetig oder unstetig ausgeführt sein können. Ein unstetiger Stoßpunkt bedeutet, dass sich die gerade Linie und die Kurve an diesem Punkt berühren, hier jedoch eine abrupte Richtungsänderung erfolgt, so dass die erste Ableitung an dieser Stelle ungleich Null ist. Ebenfalls vorteilhafterweise weist eine Außenkontur des Querschnitts des Mikrowellenresonators Geraden auf.

Vorzugsweise sind eine Einkopplungsantenne und eine Auskopplungsantenne im Mikrowellenresonator, insbesondere symmetrisch um einen Schnittpunkt der beiden Symmetrieachsen herum, auf der ersten Symmetrieachse angeordnet.

Schließlich wird die der Erfindung zugrunde liegende Aufgabe auch durch eine Maschine der Tabak verarbeitenden Industrie, insbesondere Strangmaschine, mit wenigstens einem erfindungsgemäßen vorstehend beschriebenen Mikrowellenresonatorgehäuse gelöst. Diese Maschine weist in Bezug auf das darin verwendete Mikrowellenresonatorgehäuse die vorstehend beschriebenen Merkmale, Eigenschaften und Vorteile auf.

Die erfindungsgemäße Maschine wird vorzugsweise dadurch weitergebildet, dass ein Mikrowellenresonatorgehäuse mit hohlzylindrischem Mikrowellenresonator und ein Mikrowellenresonatorgehäuse mit vom Hohlzylinder abweichendem Mikrowellenresonator gegeneinander austauschbar oder, insbesondere im Tandem, hintereinander angeordnet sind.

Ebenfalls vorzugsweise weist der vom Hohlzylinder abweichende Mikrowellenresonator einen kleineren Resonatorspalt auf als der hohlzylindrische Mikrowellenresonator, wobei die Mikrowellenresonatoren insbesondere mit der gleichen Frequenz betreibbar sind und/oder mit der gleichen oder einer gleichartigen Elektronik betreibbar sind oder betrieben werden. Auf diese Weise ist es möglich, mit geringem Aufwand sowohl einen großen Resonatorspalt als auch einen kleinen Resonatorspalt abwechselnd oder im Tandem miteinander zu realisieren, wobei außerdem eine gleiche oder gleichartige Elektronik verwendbar ist, was zu Kosteneinsparungen führt.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung eines Resonatorgehäuses nach dem Stand der Technik gemäß DE 10 2004 017 597 B4,
- Fig. 2: eine schematische Detaildarstellung eines erfindungsgemäßen Resonatorgehäuses,
- Fig. 3: eine schematische Darstellung eines alternativen erfindungsgemäßen Resonatorgehäuses,
- Fig. 4: eine schematische Darstellung eines weiteren alternativen erfindungsgemäßen Resonatorgehäuses,
- Fig. 5: eine schematische Darstellung eines Schnitts durch eine erste Symmetrieachse eines alternativen erfindungsgemäßen Resonatorgehäuses,
- Fig. 6: eine schematische Darstellung eines Schnitts durch eine zweite Symmetrieachse des Mikrowellengehäuses gemäß Fig. 5,
- Fig. 7: eine schematische perspektivische Darstellung des Mikrowellengehäuses gemäß Fig. 5 und 6 und
- Fig. 8: eine schematische Darstellung einer Draufsicht auf das Mikrowellenresonatorgehäuse gemäß den Fig. 5 bis 7.

In den Zeichnungen sind jeweils gleiche oder gleichartige Elemente und/oder Teile mit denselben Bezugsziffern versehen, so dass von einer erneuten Vorstellung jeweils abgesehen wird.

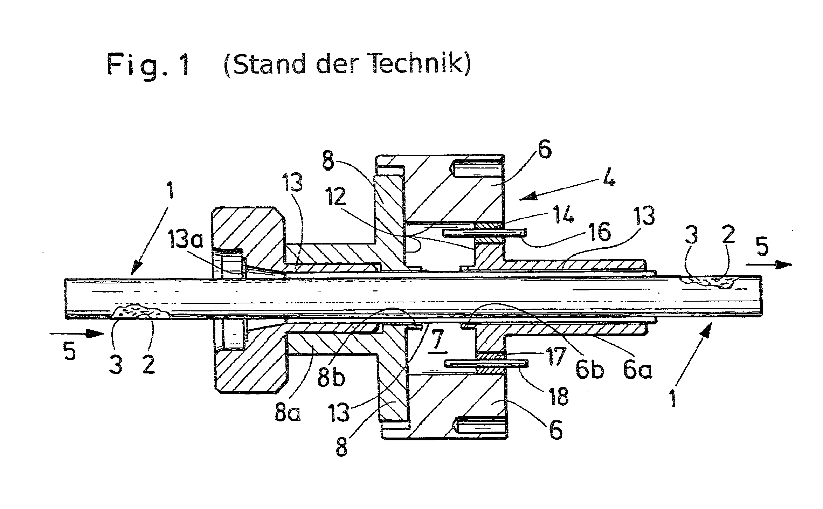

Fig. 1 zeigt einen teilweise aufgebrochenen, in Richtung des Pfeils 5 bewegten Materialstrang 1, in diesem Fall einen Zigarettenstrang, bestehend aus einem Füller 2 aus Schnitttabak und einer Umhüllung 3 aus Zigarettenpapier, der ein Resonatorgehäuse 4 durchsetzt, dem Mikrowellen zwecks Erfassung wenigstens einer Eigenschaft des Füllers 2, beispielsweise der Masse oder der Feuchte, zugeführt werden. Das Resonatorgehäuse 4 gemäß DE 10 2004 017 597 B4 weist einen Hohlkörper in Form eines Hohlzylinders 6 auf, dessen Innenraum (Resonatorraum) 7 symmetrisch zu dem Zigarettenstrang 1 angeordnet ist. An ihm ist ein Deckel 8 zum Verschließen angeschraubt. Sowohl Hohlzylinder 6 als auch Deckel 8 bestehen aus nichtmetallischem Material mit einem sehr niedrigen Temperaturausdehnungskoeffizienten, beispielsweise einem Glas oder einer Glaskeramik. Wenigstens der Hohlzylinder 6 sollte aus dem nichtmetallischen Material mit dem sehr niedrigen Temperaturausdehnungskoeffizienten bestehen. In Folge der guten Konstanz der Geometrie des Resonatorgehäuses 4 und des Resonatorraums 7 lässt sich auch eine gute Konstanz der Messergebnisse erreichen.

Der Resonatorraum 7 des Resonatorgehäuses 4 ist mit einer dünnen Goldschicht 12 bedampft, die eine die Messwertkonstanz beeinträchtigende Korrosionsbildung zuverlässig verhindert.

Zum mechanischen Abschluss des Resonatorraums 7 gegenüber dem Zigarettenstrang 1 und von diesem eventuell angeförderten Schmutzteilchen, also zwecks Verhinderung einer Verschmutzung des Resonatorraums 7, die das Messergebnis beeinträchtigen würde, dient ein Schutzrohr 13, das vorteilhaft aus einer Substanz der Polyaryletherketon (PAEK)-Gruppe, z. B. aus Polyetheretherketon (PEEK) besteht. An einem seiner Enden 13a, an dem der Strang 1 in das Resonatorgehäuse 6 einläuft, ist das Schutzrohr 13 trichterförmig aufgeweitet.

Das Resonatorgehäuse 4 erstreckt sich außerhalb des Resonatorraums 7 rohrförmig (6a, 8a) auf beiden Seiten in Richtung des Strangs 1 nach außen, um den Austritt von Mikrowellen aus der Resonatorkammer zu verhindern. Es erstreckt sich auch rohrförmig (6b, 8b) etwas nach innen. Zur Einkopplung der von einem Mikrowellengenerator erzeugten Mikrowellen dient eine durch einen Isolierring 14 vom Hohlzylinder 6 isolierte Antenne 16. Zum Auskoppeln von Mikrowellen, die einer nicht dargestellten Auswertschaltung zugeführt werden sollen, dient eine durch eine Isolierung 17 vom Hohlzylinder 6 isolierte Antenne 18. Auf die Isolierungen 14 und 17 kann verzichtet werden, falls der Hohlzylinder 6 selbst nicht leitend ist. Bei einem leitfähigen nichtmetallischen Material des Hohlzylinders 6 sind die Isolierringe bzw. Isolierungen 14 und 17 für die Koppelantennen 16 und 18 notwendig.

Die rohrförmige Erstreckung 6b, 8b der Endflächen des Resonators 7 führen dazu, dass der Resonatorspalt gegenüber der Höhe des Resonators 7 verkleinert ist. Damit wird die Ortsauflösung verbessert, allerdings vermindert sich auch die Eindringtiefe des Mikrowellenfeldes in den Materialstrang 1 hinein. Zusätzlich ergibt sich eine relativ starke Ausdehnung des Mikrowellenfeldes in Strangrichtung außerhalb des Mikrowellenresonators 7, da das Gehäuse den Materialstrang 1 stromaufwärts und stromabwärts des Mikrowellenresonators 7 mit zylindrischen Innenflächen flach umgibt, so dass sich keine nennenswerte Bündelung am Ort des Mikrowellenresonators 7 und des Resonatorspaltes ergibt.

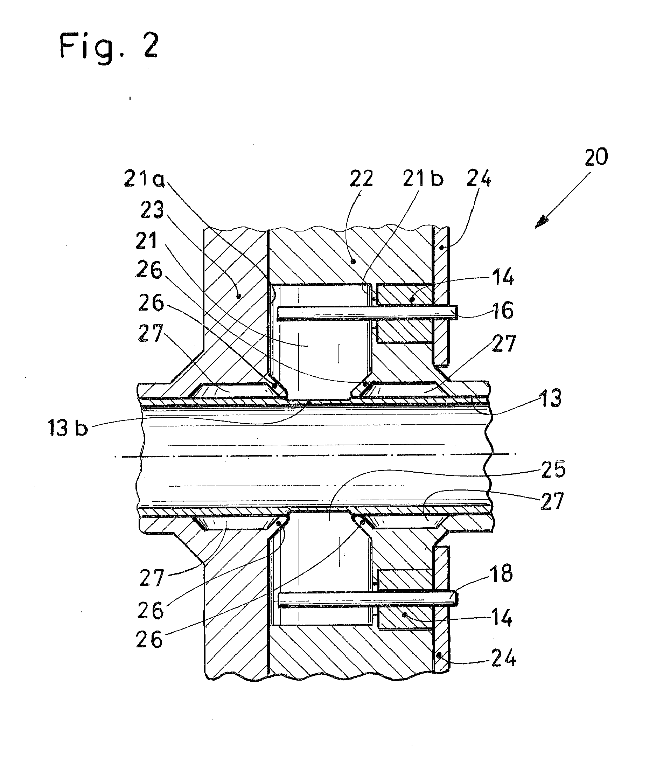

In Fig. 2 ist ein Ausschnitt aus einem erfindungsgemäßen Resonatorgehäuse 20 dargestellt. Auch dieses Resonatorgehäuse 20 umgibt einen im Wesentlichen hohlzylindrischen Mikrowellenresonator 21 mit zwei flachen Endflächen 21 a, 21 b. Zwischen den Endflächen 21 a, 21 b befindet sich ein Resonatorspalt 25. Wenn, wie in Fig. 1 gezeigt, ein Materialstrang von links nach rechts durch den Mikrowellenresonator 21 geführt wird, ist die Endfläche 21 a stromaufwärts und die Endfläche 21 b stromabwärts angeordnet. Der Mikrowellenresonator 21 wird durch einen Hohlzylinder 22 begrenzt, der durch einen Deckel 23 stromaufwärts abgeschlossen ist. Stromabwärts schließt sich eine Leiterplatte 24 an.

Der Resonatorspalt 25 ist durch die Kragen 26, die von den Endflächen 21a, 21 b nach innen abzweigen, begrenzt. Hierbei handelt es sich um umlaufende flächige ringförmige Körper mit schrägem, geradem Querschnitt. Hierdurch ist in einem zentrumsnahen ringförmigen Abschnitt die Höhe des Resonators 21 zwischen den Endflächen 21 a, 21 b verringert bis zum Resonatorspalt 25. An dieser Stelle stoßen die Kanten der Kragen 26 an das Schutzrohr 13, das in diesem Abschnitt 13b in seiner Wandstärke verringert ist.

Auf der jeweiligen Rückseite der Kragen 26 stromaufwärts bzw. stromabwärts des Mikrowellenresonators 21 sind im Hohlzylinder 22 bzw. dem Deckel 23 Hinterdrehungen 27 angeordnet, deren Grundflächen in radialer Richtung gegenüber den Kanten der Kragen 26 zurückgesetzt sind, also einen größeren Durchmesser aufweisen. Die Zurücksetzung der Grundfläche der Hinterdrehung 27 zusammen mit der schräg gestellten Hinterwand der jeweiligen Kragen 26 sorgen dafür, dass die Feldlinien des Mikrowellenfeldes sich auf dem Kragen 26 stark bündeln, so dass dieser gegenüber der Grundfläche der Hinterdrehung 27 wie eine Antenne wirkt. Diese Bündelung verhindert das Ausbreiten des Mikrowellenfeldes in die Durchführungsöffnung und in Längsrichtung des Materialstrangs. Gleichzeitig projiziert die Anordnung der Kragen 26 die Feldlinien des Mikrowellenfeldes in den Materialstrang hinein.

Die Hinterdrehungen 27 sind auf den vom Mikrowellenresonator 21 abgewandten Seiten wiederum abgeschlossen, so dass das Schutzrohr 13 an diesen Stellen gestützt wird und ein Austreten von Mikrowellen aus dem Resonatorgehäuse 20 durch die Hinterdrehungen 27 verhindert wird.

Die Anordnung und Wahl der Form der Kragen 26 hat den weiteren Effekt, dass Resonanzen im Mikrowellenresonator, die nicht der E₀₁₀-Mode entsprechen, verringert werden, so dass die dadurch auftretenden Messungenauigkeiten ebenfalls vermindert werden. Der dargestellte Fall zeigt die Kragen 26 stromaufwärts und stromabwärts des Mikrowellenresonators 21 in spiegelbildlicher Anordnung. Die Winkel, die die Kragen 26 jeweils mit den Endflächen 21 a, 21 b einschließen, betragen ca. 135°. Es ist aber auch möglich, verschiedene Winkel bei der Endfläche 21 a und der Endfläche 21 b einzustellen.

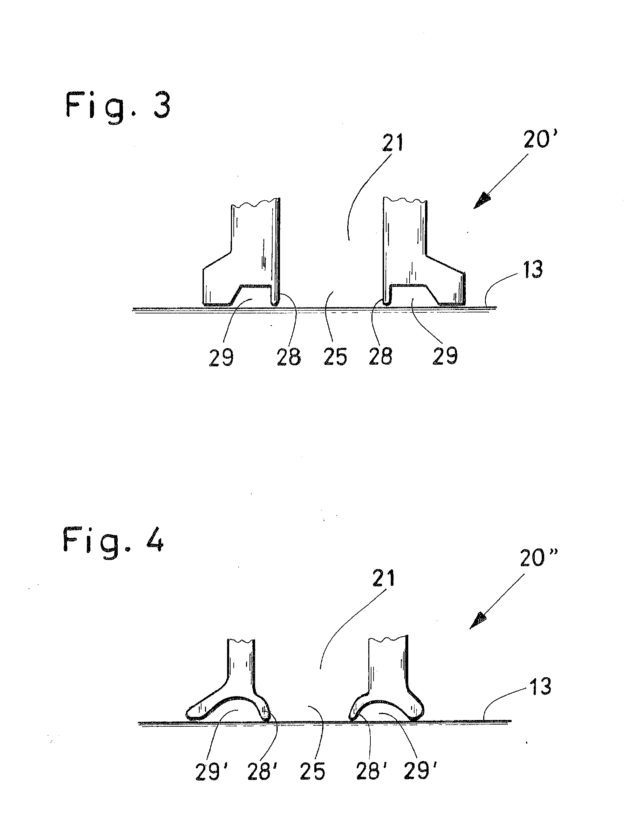

Die Fig. 3 und 4 zeigen stark schematisiert zwei alternative Anordnungen. So ist in Fig. 3 ein Mikrowellenresonator 21 gezeigt mit einem Resonatorspalt 25, der durch zwei Kragen 28 stromaufwärts und stromabwärts des Mikrowellenresonators 21 begrenzt wird, die die jeweiligen Endflächen ohne einen Winkel verlängern. Anders ausgedrückt beträgt der Winkel zwischen den Endflächen und den jeweiligen Kragen 28 180°. Die Feldlinien treten somit bevorzugt senkrecht in den Materialstrang ein. Die entsprechenden Hinterdrehungen 29 sind ebenfalls dargestellt. Der Resonatorspalt 25 weist in Fig. 3 die gleiche Breite auf wie die Höhe des Mikrowellenresonators 21 des Resonatorgehäuses 20' in Fig. 3.

In Fig. 4 ist ein alternatives Resonatorgehäuse 20" schematisch im Detail dargestellt, wobei die Kragen 28' eine gebogene Konfiguration aufweisen. Am Ansatz der Kragen 28' zu der jeweiligen Endfläche weisen diese einen Winkel von ca. 100° zur Endfläche auf, wobei die Biegung jedoch in Richtung auf den Materialstrang zu, also nach innen, verläuft, so dass an der Kante der jeweiligen Kragen 28' diese fast senkrecht in den Materialstrang hineinweisen. Entsprechend gebogen sind auch die Begrenzungswände der Hinterdrehungen 29'. Diese gebogene Ausführungsform hat den Vorteil, dass neben einer Verengung des Resonatorspaltes 25 gegenüber der Höhe des Mikrowellenresonators 21 auch eine stärkere Projektion der Feldlinien, die von der jeweiligen Kante der Kragen 28' ausgehen, in den Materialstrang hinein erreicht wird.

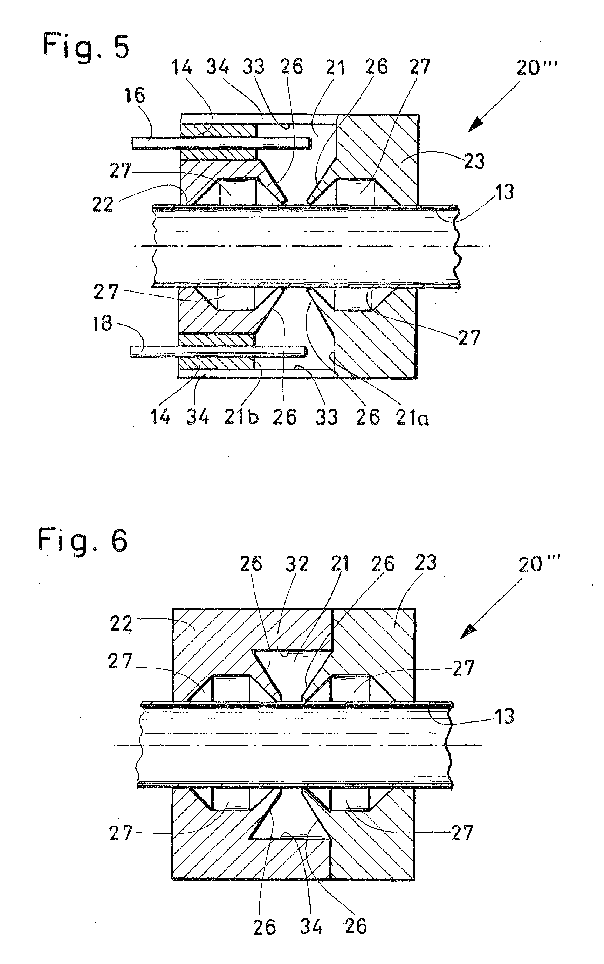

In Fig. 5 und Fig. 6 sind zwei Querschnitte durch ein weiteres erfindungsgemäßes Mikrowellenresonatorgehäuse 20'" schematisch dargestellt. Es handelt sich in Fig. 5 um einen Schnitt durch eine Symmetrieachse, die eine Einkopplungsantenne 16 und eine Auskopplungsantenne 18 umfasst und in Fig. 6 um einen Schnitt entlang einer Symmetrieachse senkrecht dazu. Der Spalt zwischen den Kragen 26 ist im Vergleich zu den Ausführungsbeispielen gemäß Fig. 2 bis 4 weiter verringert.

Wie in den beiden Fig. 5 und 6 erkennbar ist, ist die Ausdehnung des Mikrowellenresonators 21 in der ersten Symmetrieachse gemäß Fig. 5, die die Einkopplungsantenne 16 und die Auskopplungsantenne 18 umfasst, größer als in dem Schnitt durch die senkrecht dazu liegende Symmetrieachse in Fig. 6. Der Mikrowellenresonator 21 hat somit einen ovalen Querschnitt. Die Umrandung ist in Fig. 5 Teil einer gekrümmten Umfangsfläche 33 und in Fig. 6 Teil einer ebenen Umfangsfläche 32. Die gekrümmte Umfangsfläche 33 wird durch einen Teil des Gehäuses 34 gebildet.

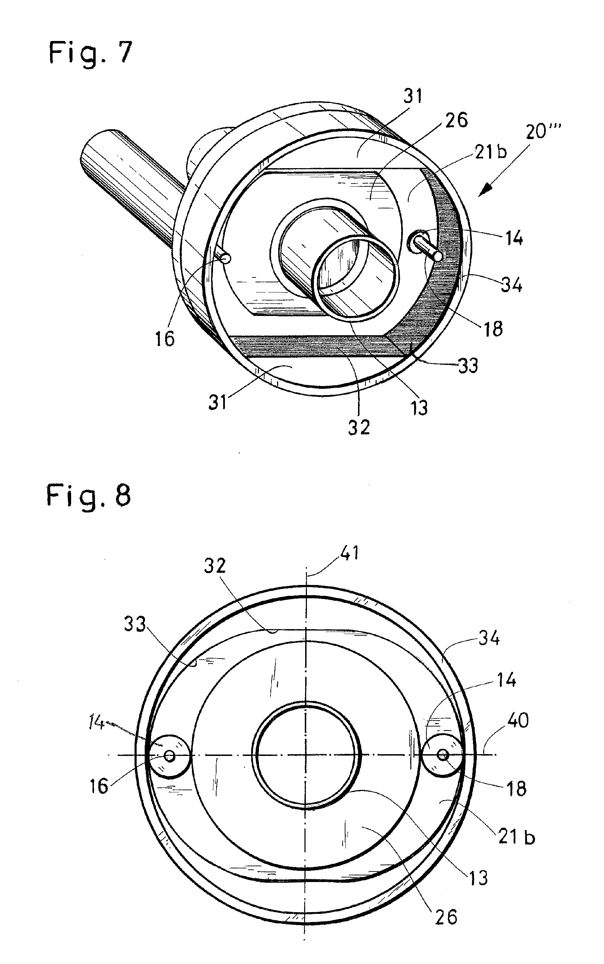

In Fig. 7 ist eine schematische Perspektivdarstellung des Mikrowellenresonatorgehäuses 20'" gezeigt, in der erkennbar ist, dass die ebenen Umfangsflächen 32 durch Seitenteile 31 im Gehäuse 34 gebildet sind, dessen restlicher Teil die gekrümmte Umfangsfläche 33 definiert. Im äußeren Teil des Umfangs ist die flache Endfläche 21 b erkennbar, von der aus sich innen der Kragen 26 erstreckt, der einen Teil des Resonatorspaltes definiert. In der Endfläche 21 b sind jeweils Isolierringe 14 zu den Antennen 16, 18 angeordnet.

In Fig. 8 ist eine Draufsicht auf einen entsprechenden Mikrowellenresonator gezeigt, bei dem in einem gemeinsamen Gehäuse 34 und um ein Schutzrohr 13 für einen Materialstrang herum der Mikrowellenresonator so ausgebildet ist, dass er um eine erste Symmetrieachse 40 und um eine zweite, senkrecht zu der ersten Symmetrieachse 40 gestellten Symmetrieachse 41 spiegelsymmetrisch ist. In der Ausrichtung der ersten Symmetrieachse 40 weist der Mikrowellenresonator seine größere Ausdehnung aus. Auf dieser ersten Symmetrieachse 40 sind die Antennen 16, 18 symmetrisch um das Zentrum bzw. den Schnittpunkt der Symmetrieachsen 40, 41 herum angeordnet. Die geringere Ausdehnung weist der Mikrowellenresonator in Richtung der zweiten Symmetrieachse 41 auf. Im Unterschied zu dem Ausführungsbeispiel gemäß Fig. 7, bei dem die ebene Fläche 32 nicht stetig in die gekrümmte Umfangsfläche 33 übergeht, ist der Übergang bei dem Ausführungsbeispiel gemäß Fig. 8 stetig.

Der Abstand zwischen den und die Positionen der Antennen 16, 18 in dem Ausführungsbeispiel der Figuren 5 bis 8 entsprechen denjenigen des hohlzylindrischen Ausführungsbeispiels der Figuren 2 bis 4. Die Dimensionen sind vorzugsweise so gewählt, dass für beide Ausführungsbeispiele die gleiche Elektronik bzw. Mikrowellenschaltung eingesetzt werden kann.

In allen Ausführungsbeispielen gemäß Fig. 2 bis Fig. 8 sind die Kanten der Kragen 26, 28, 28' jeweils abgerundet, so dass sich hier eine gleichmäßige Bündelung von Feldlinien des Mikrowellenfeldes ergibt. In allen diesen Fällen werden durch die erfindungsgemäß eingesetzten Kragen und Hinterdrehungen eine gute Ortsauflösung und gleichzeitig eine hohe Eindringtiefe des Mikrowellenfeldes in den jeweiligen Materialstrang erreicht.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Materialstrang
- 2: Füller
- 3: Umhüllung
- 4: Resonatorgehäuse
- 5: Bewegungsrichtung
- 6: Hohlzylinder
- 6a: äußere Erstreckung Hohlzylinder
- 6b: innere Erstreckung Hohlzylinder
- 7: Resonatorraum
- 8: Deckel
- 8a: äußere Erstreckung Deckel
- 8b: innere Erstreckung Deckel
- 12: Goldschicht
- 13: Schutzrohr
- 13a: Schutzrohreinlass
- 13b: dünner Schutzrohrabschnitt
- 14: Isolierring
- 16: Einkopplungsantenne
- 17: Isolierung
- 18: Auskopplungsantenne
- 20-20'": Mikrowellenresonatorgehäuse
- 21: Mikrowellenresonator
- 21 a, 21 b: Endfläche
- 22: Hohlzylinder
- 23: Deckel
- 24: Leiterplatte
- 25: Resonatorspalt
- 26: Kragen
- 27: Hinterdrehung
- 28, 28': Kragen
- 29, 29': Hinterdrehung
- 31: Seitenteil
- 32: ebene Umfangsfläche
- 33: gekrümmte Umfangsfläche
- 34: Gehäuse
- 40: erste Symmetrieachse
- 41: zweite Symmetrieachse

## Patentansprüche

1. Mikrowellenresonatorgehäuse (20, 20', 20", 20"'), insbesondere zur Messung von Eigenschaften eines Materialstrangs (1) der Tabak verarbeitenden Industrie, mit wenigstens einem als Mikrowellenresonator (21) ausgebildeten, insbesondere im Wesentlichen hohlzylindrischen, Innenraum, der durch einen Materialstrang (1) durchsetzbar ist und dem Mikrowellen zuführbar sind, wobei die Endflächen (21 a, 21 b) des Mikrowellenresonators (21) in der Symmetrieachse des Mikrowellenresonators (21) zentrale Durchführungsöffnungen für einen Materialstrang aufweisen, **dadurch gekennzeichnet, dass** wenigstens eine der beiden Endflächen (21a, 21b) in einem ringförmigen Bereich um die Durchführungsöffnung herum in einen umlaufenden und radial nach innen überstehenden Kragen (26, 28, 28') münden, dessen innere Öffnung eine Durchführungsöffnung für den Materialstrang (1) bildet und der eine von dem den Mikrowellenresonator (21) bildenden Innenraum abgewandte Rückseite aufweist, an der sich der Innendurchmesser des Gehäuses (20, 20', 20", 20'") gegenüber dem Durchmesser der Durchführungsöffnung unter Bildung einer ringförmigen Hinterdrehung (27, 29, 29') erweitert.

2. Mikrowellenresonatorgehäuse (20, 20', 20", 20'") nach Anspruch 1, **dadurch gekennzeichnet, dass** die Hinterdrehung (27, 29, 29') oder die Hinterdrehungen (27, 29, 29') in Strangförderrichtung stromaufwärts und/oder stromabwärts des Mikrowellenresonators (21') durch einen oder mehrere radial nach innen überstehende Gehäuseabschnitte abgeschlossen wird oder werden.

3. Mikrowellenresonatorgehäuse (20, 20', 20", 20'") nach Anspruch 1 oder 2, **dadurch gekennzeichnet, dass** der Kragen (26, 28, 28') eine im Querschnitt gerade oder gebogene ringförmig um die Durchführungsöffnung herum laufende Fläche bildet.

4. Mikrowellenresonatorgehäuse (20, 20', 20", 20'") nach einem der Ansprüche 1 bis 3, **dadurch gekennzeichnet, dass** eine die Durchführungsöffnung begrenzende Endkante des Kragens (26, 28, 28') abgerundet ist.

5. Mikrowellenresonatorgehäuse (20, 20', 20", 20'") nach einem der Ansprüche 1 bis 4, **dadurch gekennzeichnet, dass** der Kragen (26, 28, 28') die Endfläche (21a, 21 b) verlängert oder einen Winkel mit der Endfläche (21 a, 21 b) von mehr als 90° bis zu 180°, insbesondere zwischen 120° und 150°, einschließt.

6. Mikrowellenresonatorgehäuse (20, 20', 20", 20'") nach einem der Ansprüche 1 bis 4, **dadurch gekennzeichnet, dass** der Kragen (26, 28, 28') mit der Endfläche (21 a, 21 b) einen Winkel von mehr als 180°, insbesondere bis zu 225°, einschließt.

7. Mikrowellenresonatorgehäuse (20, 20', 20", 20'") nach einem der Ansprüche 1 bis 6, **dadurch gekennzeichnet, dass** die Hinterdrehung (27, 29, 29') einen trapezförmigen Querschnitt aufweist.

8. Mikrowellenresonatorgehäuse (20, 20', 20", 20'") nach einem der Ansprüche 1 bis 7, **dadurch gekennzeichnet, dass** ein Schutzrohr (13) für den Materialstrang (1) durch die Durchführungsöffnungen und den Mikrowellenresonator (21) verläuft, wobei eine Wandstärke des Schutzrohrs (13) auf dem durch den Mikrowellenresonator (21) verlaufenden Abschnitt (13b) geringer ist als außerhalb des Mikrowellenresonators (21).

9. Mikrowellenresonatorgehäuse (20"'), insbesondere zur Messung von Eigenschaften eines Materialstrangs (1) der Tabak verarbeitenden Industrie, mit wenigstens einem als Mikrowellenresonator (21) ausgebildeten im Wesentlichen hohlzylindrischen Innenraum, der durch einen Materialstrang (1) durchsetzbar ist und dem Mikrowellen zuführbar sind, wobei die Endflächen (21a, 21b) des Mikrowellenresonators (21) in der Symmetrieachse des Mikrowellenresonators (21) zentrale Durchführungsöffnungen für einen Materialstrang aufweisen, insbesondere nach einem der Ansprüche 1 bis 8, **dadurch gekennzeichnet, dass** der als Mikrowellenresonator (21) ausgebildete Innenraum einen von einem Hohlzylinder abweichenden Querschnitt aufweist, der um zwei aufeinander senkrecht stehende Symmetrieachsen (40, 41) spiegelsymmetrisch ist, wobei der Innenraum in Richtung einer ersten Symmetrieachse (40) eine größere Ausdehnung aufweist als in Richtung einer zweiten Symmetrieachse (41), wobei der Materialstrang (1) durch den Schnittpunkt der beiden Symmetrieachsen (40, 41) förderbar ist oder verläuft.

10. Mikrowellenresonatorgehäuse (20'") nach Anspruch 9, **dadurch gekennzeichnet, dass** für einen abwechselnden oder gleichzeitigen Betrieb mit einem hohlzylindrischen Mikrowellenresonator die Positionen der Einkopplungsantenne (16) und der Auskopplungsantenne (18) gegenüber dem hohlzylindrischen Mikrowellenresonator beibehalten wird und/oder die Resonanzfrequenz des Mikrowellenresonators so nahe bei der Resonanzfrequenz des hohlzylindrischen Mikrowellenresonators liegt, dass mit den gleichen Tiefpassfiltern in der jeweiligen Mikrowellenschaltung gearbeitet werden kann.

11. Mikrowellenresonatorgehäuse (20'") nach Anspruch 9 oder 10, **dadurch gekennzeichnet, dass** der Querschnitt des Mikrowellenresonators (21) im Wesentlichen oval ist, wobei insbesondere eine Außenkontur des Querschnitts des Mikrowellenresonators (21) Geraden aufweist.

12. Mikrowellenresonatorgehäuse (20'") nach einem der Ansprüche 9 bis 11, **dadurch gekennzeichnet, dass** eine Einkopplungsantenne (16) und eine Auskopplungsantenne (18) im Mikrowellenresonator (21), insbesondere symmetrisch um einen Schnittpunkt der beiden Symmetrieachsen (40, 41) herum, auf der ersten Symmetrieachse (40) angeordnet sind.

13. Maschine der Tabak verarbeitenden Industrie, insbesondere Strangmaschine, mit wenigstens einem Mikrowellenresonatorgehäuse (20, 20', 20", 20'") nach einem der Ansprüche 1 bis 12.

14. Maschine nach Anspruch 13, **dadurch gekennzeichnet, dass** ein Mikrowellenresonatorgehäuse (20, 20', 20") mit hohlzylindrischem Mikrowellenresonator (21) und ein Mikrowellenresonatorgehäuse (20'") mit vom Hohlzylinder abweichenden Mikrowellenresonator gegeneinander austauschbar oder im Tandem hintereinander angeordnet sind.

15. Maschine nach Anspruch 14, **dadurch gekennzeichnet, dass** der vom Hohlzylinder abweichende Mikrowellenresonator einen kleineren Resonatorspalt aufweist als der hohlzylindrische Mikrowellenresonator (21), wobei die Mikrowellenresonatoren insbesondere mit der gleichen Frequenz betreibbar sind und/oder mit der gleichen oder einer gleichartigen Elektronik betreibbar sind oder betrieben werden.
